# FASCICULE DE BREVET EUROPEEN

(11) **EP 1 529 065 B1**
(45) Date de publication et mention de la délivrance du brevet: **20.01.2010**
(21) Numéro de dépôt: 03758184.0
(22) Date de dépôt: 24.07.2003
(51) Int. Cl.: C08F 2/38

(54) **PROCEDE DE POLYMERISATION RADICALAIRE CONTROLEE DE L'ACIDE ACRYLIQUE ET DE SES SELS, LES POLYMERES OBTENUS, ET LEURS APPLICATIONS**
VERFAHREN ZUR KONTROLLIERTEN RADIKAL-POLYMERISATION VON ACRYLSÄURE UND SEINE SALZE, SO HERGESTELLTE POLYMERE UND DEREN VERWENDUNG
METHOD FOR THE CONTROLLED RADICAL POLYMERISATION OF ACRYLIC ACID AND THE SALTS THEREOF, POLYMERS THUS OBTAINED AND APPLICATIONS THEREOF

(30) Priorité: 26.07.2002 FR 0209499
(43) Date de publication de la demande: 11.05.2005
(73) Titulaire: COATEX S.A.S., 69730 Genay (FR)
(72) Inventeur: SUAU, Jean-Marc, F-69480 Lucenay (FR); EGRAZ, Jean-Bernard, F-69130 Ecully (FR)
(74) Mandataire: Richebourg, Michel François
(86) Numéro de dépôt international: PCT/FR2003/002337
(87) Numéro de publication internationale: WO 2004/014967

(56) Documents cités:
- FR-A- 2 794 463

## Description

La présente invention concerne un nouveau procédé de polymérisation radicalaire contrôlée de l'acide acrylique et de ses sels dans un milieu réactionnel constitué uniquement d'eau.

L'invention concerne également les homopolymères de l'acide acrylique obtenus par le nouveau procédé de polymérisation ainsi que les copolymères de l'acide acrylique avec au moins un monomère éthyléniquement insaturé hydrosoluble ou dont le copolymère est hydrosoluble.

L'invention concerne enfin l'utilisation des dits homopolymères et copolymères de l'acide acrylique dans les domaines de l'industrie tels que notamment le domaine papetier et en particulier dans le couchage du papier et la charge de masse du papier, dans le domaine pétrolier, ou encore les domaines de la peinture, du traitement des eaux, de la détergence, de la céramique, des ciments ou des liants hydrauliques, des travaux publics, des encres et des vernis, de l'encollage des textiles ou encore du finissage du cuir, et plus particulièrement concerne l'application de ces polymères comme dispersant et/ou agent d'aide au broyage de matières minérales telles que le carbonate de calcium naturel, le carbonate de calcium précipité, le kaolin, le dioxyde de titane ou les argiles.

En dernier lieu, l'invention concerne les suspensions aqueuses de charges minérales contenant lesdits polymères et plus particulièrement contenant de 0,05 % à 5 % en poids sec, par rapport au poids sec total des charges minérales, dudit polymère selon l'invention.

La polymérisation radicalaire contrôlée des monomères ioniques est une voie particulière de synthèse nécessitant l'utilisation d'agents de transfert spécifiques.

Ainsi, pour polymériser le méthacrylate de sodium les travaux de Armes (Armes, Chem.Commun, 1999, 1285) mettent en oeuvre, dans une méthode appelée Atom Transfer Radical Polymerization (ATRP), l'acide 4-cyanopentanoique dithiobenzoate tout comme Mc Cormick (Macromolecules 2002, 35, 4570-4572 et Macromolecules 2001, 34, 2248) y fait appel pour polymériser, par une méthode dénommée Reversible Addition Fragmentation Transfer (RAFT), le 2-acrylamido 2-méthyl propane sulfonate de sodium ou encore le 3-acrylamido 3-méthyl butanoate de sodium.

J.Claverie et son équipe (Macromolecules 2001, 34(16), 5370) ainsi que la demande de brevet non publiée (FR 01 02848) décrivent que le choix des substituants pour un xanthate ou un trithiocarbonate doit être judicieusement effectué pour obtenir la polymérisation RAFT. Nous entendons par judicieusement effectué, des rendements de polymérisation élevés (supérieurs à 90 %) et des indices de polymolécularité faible (inférieur à 2). Nous noterons à ce propos que l'indice de polymolécularité et les masses moléculaires sont dans la publication de Claverie et son équipe mesurés par méthode chromatographique appelée Gel Permeation Chromatography (GPC) en milieu aqueux avec des polyacrylates comme étalons, ce qui permet d'estimer très précisément la valeur des masses moléculaires et des indices de polymolécularité.

Cependant, les molécules intéressantes, c'est-à-dire les agents de transfert, ne sont pas solubles dans l'eau et il est nécessaire d'employer un solvant protique afin de réaliser les synthèses.

D'autres documents (WO 99/31144; WO 00/75207; WO ou/27176 ; WO 01/42312; WO 02/08307 ; WO 02/22688) nécessitent l'utilisation d'un milieu réactionnel de synthèse de l'agent de transfert différent de l'eau. Ces agents de transfert synthétisés en milieu solvant différent de l'eau ne permettent pas de polymériser l'acide acrylique dans le même milieu réactionnel que celui qui a permis la synthèse de l'agent de transfert.

D'autre part, les travaux de Destarac (Macromol.Rapid.Commun. 2001, 22 (18), 1497-1503 ou encore WO 98/58974) concernent notamment la polymérisation de l'acide acrylique à l'aide de xanthates de structures suivantes : 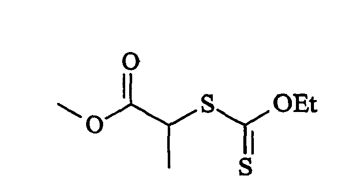 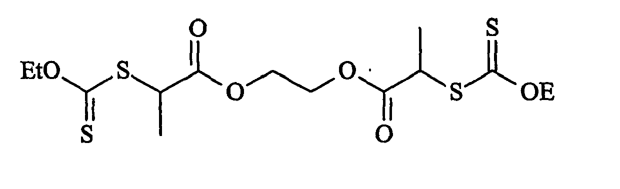 dont l'une des limitations est qu'elles nécessitent un également un co-solvant de réaction indispensable à la solvatation de ces dits xanthates pour obtenir un milieu homogène.

En effet, les quelques agents de transfert pouvant contrôler la polymérisation de l'acide acrylique doivent être solvatés dans un autre solvant, ce qui peut engendrer des purifications complexes ultérieures telles que des distillations. De plus, un co-solvant peut générer des réactions de transfert secondaire entrant alors en compétition avec la réaction de transfert du type RAFT.

Par « agents de transfert » la Demanderesse désigne dans toute la présente demande, y compris les revendications, des composés capables d'arrêter la croissance des chaînes polymères mais de manière non irréversible.

Se pose alors à l'homme du métier le problème qui consiste à la fois de disposer d'un agent de transfert hydrosoluble qui soit réellement efficace avec l'acide acrylique et de disposer d'un agent de transfert dont la synthèse ne nécessite pas d'une part l'utilisation de solvants souvent nocifs et d'autre part d'étapes de purification telles que des extractions ou des distillations (WO 00/75207 - WO 01/42312).

Il en résulte donc une difficulté de réalisation puisque l'agent de transfert doit être synthétisé en plusieurs opérations, que le polymère est obtenu dans un nouveau milieu réactionnel et qu'il doit être à nouveau purifié de toute trace de solvant pour pouvoir être mis en oeuvre dans les applications industrielles aqueuses précitées.

Un autre problème connexe réside aussi dans l'obligation de rechercher, pour les applications industrielles, des molécules d'agent de transfert relativement simples et faciles à mettre en oeuvre, avec un coût acceptable dans l'industrie.

Ainsi n'existait il pas jusqu'à ce jour de procédé d'homopolymérisation ou de copolymérisation de l'acide acrylique mettant en oeuvre un agent de transfert capable de permettre l'homopolymérisation ou la copolymérisation radicalaire contrôlée de l'acide acrylique dans un milieu réactionnel constitué uniquement d'eau à l'exception de tout autre solvant et ne posant pas les problèmes précités.

Il existe donc, malgré le progrès enregistré par la technologie « RAFT », un besoin important et reconnu pour un procédé d'homopolymérisation ou copolymérisation de l'acide acrylique dans un milieu réactionnel composé uniquement d'eau et mettant en oeuvre un agent de transfert dont la synthèse ne nécessite pas d'une part l'utilisation de solvants souvent nocifs et d'autre part d'étape de purification telles que des extractions ou des distillations.

La Demanderesse a alors trouvé, de manière surprenante, qu'un procédé en batch ou semi-batch, d'homopolymérisation de l'acide acrylique ou de copolymérisation de l'acide acrylique avec au moins un monomère éthyléniquement insaturé hydrosoluble ou dont le copolymère est hydrosoluble, dans un milieu réactionnel composé uniquement d'eau, procédé qui comporte deux étapes dont la première consiste en la synthèse « in situ » d'un agent de transfert hydrosoluble mis en oeuvre dans la deuxième étape de polymérisation, permet de résoudre les problèmes précités.

Par procédé en batch, la Demanderesse entend un procédé de polymérisation en solution dans lequel tous les monomères sont introduits dans l'étape initiale. Ce procédé permet ainsi d'obtenir des polymères différents des polymères à bloc.

Par procédé en semi-batch, la Demanderesse entend un procédé de polymérisation en solution dans lequel tous les monomères sont introduits tout au long de la polymérisation. Ce procédé permet également d'obtenir des polymères différents des polymères à bloc.

Une autre variante du procédé en batch ou semi-batch consiste en un procédé de polymérisation en solution dans lequel une partie des monomères est présente dans le réacteur dans l'étape initiale, l'autre partie étant introduite tout au long de la polymérisation. Cette autre variante du procédé permet également d'obtenir des polymères différents des polymères à bloc.

Un but de la présente invention est donc un nouveau procédé en batch ou semi-batch, de polymérisation radicalaire contrôlée de l'acide acrylique, qui permet de disposer d'un agent de transfert hydrosoluble qui soit réellement efficace avec l'acide acrylique et de disposer d'un agent de transfert dont la synthèse ne nécessite pas d'une part l'utilisation de solvants souvent nocifs et d'autre part d'étape de purification telles que des extractions ou des distillations.

Le procédé selon l'invention, d'homopolymérisation radicalaire contrôlée, en solution aqueuse, de l'acide acrylique ou de copolymérisation radicalaire contrôlée, en solution aqueuse, de l'acide acrylique avec au moins un monomère éthyléniquement insaturé hydrosoluble ou dont le copolymère est hydrosoluble, se caractérise en ce qu'il est en batch ou semi-batch et en ce qu'il comporte deux étapes dont la première est la synthèse «in situ» de l'agent de transfert hydrosoluble.

Cette synthèse « in situ » du catalyseur permet de ne pas avoir à le manipuler en tant que tel, même s'il peut être avantageux d'enlever le résidu de synthèse de l'agent de transfert qu'est le bromure de potassium ou de sodium. Cette opération n'étant pas du tout indispensable.

Lorsque le procédé selon l'invention consiste en une copolymérisation, en batch ou semi-batch, radicalaire contrôlée de l'acide acrylique avec au moins un monomère éthyléniquement insaturé hydrosoluble ou dont le copolymère est hydrosoluble, le ou les monomères éthyléniquement insaturé hydrosoluble ou dont le copolymère est hydrosoluble sont choisis parmi l'acide méthacrylique, l'acide itaconique, maléique, l'acide 2-acrylamido-2-méthyl-1-propane sulfonique sous forme acide ou partiellement neutralisée, l'acide 2-méthacrylamido-2-méthyl-1-propane sulfonique sous forme acide ou partiellement neutralisée, l'acide 3-méthacrylamido-2-hydroxy-1-propane sulfonique sous forme acide ou partiellement neutralisée, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl sulfonique, l'acide styrène sulfonique ainsi que tous leurs sels, l'acide vinyl sulfonique, le méthallylsulfonate de sodium, l'acrylate ou méthacrylate de sulfopropyle, le sulfométhylacrylamide, le sulfométhylméthacrylamide ou encore parmi l'acrylamide, le méthylacrylamide, le n-méthylolacrylamide, le n-acryloylmorpholine, le méthacrylate d'éthylène glycol, l'acrylate d'éthylène glycol, le méthacrylate de propylène glycol, l'acrylate de propylène glycol, l'acide propène phosphonique, le phosphate d'acrylate ou méthacrylate d'éthylène ou propylène glycol ou bien encore parmi la vinylpyrrolidone, le méthacrylamido propyl triméthyl ammonium chlorure ou sulfate, le méthacrylate de triméthyl ammonium éthyl chlorure ou sulfate, ainsi que leurs homologues en acrylate et en acrylamide quaternisés ou non et/ou le diméthyldiallylchlorure d'ammonium, ainsi que leurs mélanges.

De manière plus particulière, le procédé selon l'invention se caractérise en ce que l'agent de transfert hydrosoluble est un sel de xanthate α-substitué β-carboxylé.

De manière encore plus particulière, l'agent de transfert hydrosoluble selon l'invention est un xanthate de sodium α-substitué β-carboxylé, et tout à fait préférentiellement le xanthate de sodium α-substitué β-carboxylé, selon l'invention est le xanthate α-méthyl β-carboxylate de sodium.
De manière également particulière, le procédé selon l'invention se caractérise en ce que le milieu réactionnel de la première étape de synthèse de l'agent de transfert et de la deuxième étape de polymérisation est identique et est de l'eau.

Selon un mode de réalisation préféré, dans la deuxième étape de polymérisation les limites de quantité d'agent de transfert sont fixées de telle façon que le rapport molaire d'agent de transfert à monomère soit compris entre 0,001 % et 20 % et le rapport massique d'agent de transfert à monomère soit compris entre 0,01 % et 60%.

De manière tout à fait particulière, le procédé selon l'invention consiste donc à mettre en contact dans la première étape :
- un xanthate de potassium,
- un sel de sodium d'acide 2-bromopropionique,
- de l'eau,
puis à ajouter dans une deuxième étape l'acide acrylique et au moins un initiateur hydrosoluble de radicaux libres.

Les initiateurs de radicaux libres mis en oeuvre dans le procédé de polymérisation selon l'invention sont les initiateurs de radicaux libres hydrosolubles bien connus de l'homme du métier et sont notamment choisis parmi les composés à base d'hydroxylamine ou parmi les bisulfites tels que le métabisulfite de sodium ou encore parmi les peroxydes comme entre autres l'eau oxygénée ou l'hydroperoxyde de tertio-butyle, ou bien encore parmi les persels comme notamment le persulfate ou perborate ou perchlorate de sodium, d'ammonium, ou de potassium ou analogues, ou encore sont choisis parmi les composés azoïques tels que notamment l'acide 4-4'-azobis(4-cyanopentanoique), le 2-2'-azobis(2-méthyl-N-hydroxyéthyl)-propionamide, le 2-2'-azobis(2-méthyl-N-(1,1-bis(hydroxyméthyl)éthyl)propionamide, le dichlorure de 2-2'-azobis(N,N'-diméthylèneisobutyramidine), le dichlorure de 2-2'-azobis(2-amidinopropane), le dichlorure de 2-2'-azobis(N,N'-diméthylèneisobutyramide), le 2-2'-azobis(isobutyramide) dihydrate ou sont encore choisis parmi l'hypophosphite de sodium, l'acide hypophosphoreux ou bien encore l'acide phosphoreux et/ou leurs sels en présence éventuelle de sels métalliques par exemple de fer ou de cuivre, ou sont encore choisis parmi les mélanges d'au moins deux des initiateurs précités.

De manière encore plus particulière, la première étape est réalisée avec des quantités équimolaires de xanthate de potassium et du sel de sodium de l'acide 2-bromopropionique, alors que la deuxième étape a lieu avec les limites précitées en quantité d'agent de transfert à monomères.

L'invention concerne également les agents de transfert utilisés dans le procédé ci-dessus.

Ces agents de transfert hydrosolubles selon l'invention se caractérisent en ce qu'ils sont obtenus dans le milieu réactionnel de polymérisation à savoir l'eau.

De manière très particulière, l'agent de transfert hydrosoluble selon l'invention se caractérise en ce qu'il est le xanthate α-méthyl β-carboxylate de sodium.

Un autre but de l'invention est de fournir les polymères obtenus par le procédé ci-dessus.

Les polymères selon l'invention sont obtenus d'une manière très simple et ne nécessitent pas ou peu de purification.

Les polymères selon l'invention se caractérisent en ce qu'ils sont obtenus par le procédé de polymérisation selon l'invention et en ce qu'ils présentent une masse moléculaire moyenne en poids (M_{w}) comprise entre 1000 g/mole et 60 000 g/mole, plus particulièrement comprise entre 4500 g/mole et 8000g/mole avec un indice de polymolécularité inférieur ou égal à 2 pour un taux de conversion par rapport à l'acide acrylique supérieur à 90 %.

Le taux de conversion de l'acide acrylique en poly(acide acrylique) est mesuré par chromatographie liquide à haute pression (HPLC). Dans cette méthode, les composants constitutifs du mélange sont séparés sur une phase stationnaire, et détectés par un détecteur UV. Après étalonnage du détecteur, on peut à partir de l'aire du pic correspondant au composé acrylique obtenir la quantité d'acide acrylique résiduel. Cette méthode fait partie de l'état de l'art, et est décrite dans de nombreux ouvrages de référence, comme, par exemple, dans le manuel «Chimie Organique Expérimentale», par M. Chavanne, A. Julien, G. J. Beaudoin, E. Flamand, deuxième Edition, Editions Modulo, chapitre 18, pages 271-325.

La masse moléculaire moyenne en poids est déterminée par une méthode GPC ayant pour étalon une série de 5 étalons de polyacrylate de sodium fourni par Polymer Standard Service sous les références PAA 18K, PAA 8K, PAA 5K, PAA 4K et PAA 3K.

La Demanderesse précise à ce niveau que l'étalonnage polyacrylate est choisi car il lui paraît le mieux adapté pour des polymères de l'acide acrylique et que les résultats obtenus dépendent du type d'étalonnage utilisé.

Ces homopolymères et/ou copolymères selon l'invention sont soit sous leur forme acide, c'est-à-dire non neutralisée, soit partiellement ou totalement neutralisés par un ou plusieurs agents de neutralisation monovalents, divalents, trivalents ou de valence plus élevée ou leurs mélanges.

Les agents de neutralisation monovalents sont choisis dans le groupe constitué par les composés contenant des cations alcalins, en particulier le sodium et le potassium, ou encore le lithium, l'ammonium, ou bien les amines primaires ou secondaires aliphatiques et/ou cycliques telles que par exemple les éthanolamines, la mono et diéthylamine ou encore la cyclohexylamine.

Les agents de neutralisation divalents, trivalents ou de valence plus élevée sont choisis dans le groupe constitué par les composés contenant des cations divalents alcalino-terreux, en particulier le magnésium et le calcium, ou encore le zinc, de même que par les cations trivalents, dont en particulier l'aluminium, ou encore par certains composés contenant des cations de valence plus élevée.

Enfin, un autre but de l'invention est l'utilisation de ces polymères selon l'invention dans les domaines de l'industrie tels que notamment le domaine papetier et en particulier dans le couchage du papier et la charge de masse du papier, dans le domaine pétrolier, ou encore les domaines de la peinture, du traitement des eaux, de la détergence, de la céramique, des ciments ou des liants hydrauliques, des travaux publics, des encres et des vernis, de l'encollage des textiles ou encore du finissage du cuir, et plus particulièrement concerne l'application de ces polymères comme dispersant et/ou agent d'aide au broyage de matières minérales telles que le carbonate de calcium naturel, le carbonate de calcium précipité, le kaolin, le dioxyde de titane ou les argiles.

Ainsi, l'invention concerne également les suspensions aqueuses de charges minérales contenant lesdits polymères et plus particulièrement contenant de 0,05 % à 5 % en poids sec dudit polymère par rapport au poids sec total des charges minérales.

Ces suspensions aqueuses de charges minérales se caractérisent également en ce que la charge minérale est choisie parmi le carbonate de calcium naturel tel que notamment la calcite, la craie ou encore le marbre, le carbonate de calcium synthétique encore appelé carbonate de calcium précipité, les dolomies, l'hydroxyde de magnésium, le kaolin, le talc, le gypse, l'oxyde de titane, ou encore l'hydroxyde d'aluminium ou toute autre charge minérale habituellement mise en oeuvre dans les domaines tels que notamment le domaine papetier en particulier dans le couchage du papier et la charge de masse du papier, pétrolier, de la peinture, du traitement des eaux, de la détergence, de la céramique, des ciments ou des liants hydrauliques, des travaux publics, des encres et des vernis, de l'encollage des textiles ou encore du finissage du cuir.

Les papiers fabriqués et/ou couchés selon l'invention se caractérisent en ce qu'ils contiennent les dites suspensions aqueuses de charges minérales selon l'invention.

Les formulations de peinture selon l'invention se caractérisent en ce qu'elles contiennent lesdites suspensions aqueuses de charges minérales selon l'invention.
Les boues de forage selon l'invention se caractérisent en ce qu'elles contiennent lesdites suspensions aqueuses de charges minérales selon l'invention.

En pratique l'opération de délitage encore appelée opération de dispersion de la substance minérale à disperser peut s'effectuer de deux manières différentes.
Une des manières consiste à réaliser sous agitation la préparation d'une suspension de charges minérales en introduisant tout ou partie de l'agent dispersant selon l'invention dans la phase aqueuse, puis le matériau minéral, de manière à obtenir la suspension aqueuse de charges minérales mise en oeuvre dans les domaines d'applications précités.

Une autre des manières consiste à préparer la suspension de charges minérales en introduisant dans le gâteau de charge minérale la totalité de la quantité d'agent dispersant à tester de manière à obtenir la suspension aqueuse de charges minérales mise en oeuvre dans les domaines d'applications précités. Cette opération de délitage peut être consécutive à l'opération de broyage décrite ci-après ou bien peut être mise en oeuvre de manière totalement indépendante.

Ainsi, en pratique, l'opération de broyage de la substance minérale à affiner consiste à broyer la substance minérale avec un corps broyant en particules très fines dans un milieu aqueux contenant l'agent d'aide au broyage.

A la suspension aqueuse de la substance minérale à broyer, on ajoute le corps broyant de granulométrie avantageusement comprise entre 0,20 et 4 millimètres. Le corps broyant se présente en général sous la forme de particules de matériaux aussi divers que l'oxyde de silicium, l'oxyde d'aluminium, l'oxyde de zirconium ou de leurs mélanges, ainsi que les résines synthétiques de haute dureté, les aciers, ou autres. Un exemple de composition de tels corps broyants est donné par le brevet FR 2303681 qui décrit des éléments broyants formés 30 % à 70 % en poids d'oxyde de zirconium, 0,1 % à 5 % d'oxyde d'aluminium et de 5 % à 20 % d'oxyde de silicium.

Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à micro-éléments.
Le temps nécessaire pour aboutir à la finesse souhaitée de la substance minérale après broyage varie selon la nature et la quantité des substances minérales à broyer, et selon le mode d'agitation utilisé et la température du milieu pendant l'opération de broyage.

Les suspensions aqueuses ainsi obtenues peuvent être utilisées dans le domaine du papier en charge de masse ou en couchage.

Pendant la fabrication de la feuille de papier, c'est-à-dire pendant leur utilisation comme charge de masse, ces suspensions peuvent être mises en oeuvre avec les cassés de couchage.

Elles peuvent être également mises en oeuvre dans le domaine des peintures ou des boues de forage.

Les papiers fabriqués et/ou couchés selon l'invention se caractérisent en ce qu'ils contiennent les dites suspensions aqueuses de charges minérales selon l'invention.

Les formulations de peinture selon l'invention se caractérisent en ce qu'elles contiennent lesdites suspensions aqueuses de charges minérales selon l'invention.

D'autres caractéristiques et avantages de l'invention seront mieux compris à la lecture des exemples qui vont suivre.

### EXEMPLE 1 :

Cet exemple concerne la préparation de différents polymères selon l'invention.

Pour ce faire, selon la réaction suivante : 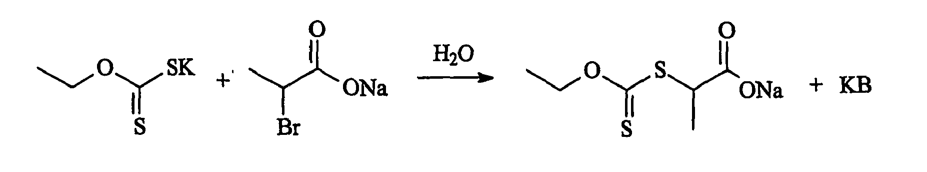 la synthèse de xanthate hydrosoluble est stoechiométrique et se réalise intégralement dans l'eau.

### Essai n° 1 :

Pour cet essai, on introduit dans un réacteur de 1 litre muni d'une agitation :
➢ 5,14 g de xanthate de potassium,
➢ 4,91 g d'acide 2-bromo propionique dissout dans 10 g d'eau,
➢ 2,57 g de soude à 50 %, diluée dans 10 g d'eau ;
et on obtient une solution à pH d'environ 5,6 à laquelle on ajoute encore 5 g d'eau.

On obtient alors une solution limpide, légèrement orangée que l'on laisse sous agitation deux heures à température ambiante (environ 25°C).

On contrôle alors la substitution du bromure par le xanthate en dosant le bromure libre Br - par électrophorèse capillaire.

On charge ensuite dans ce réacteur :
- 202,8 g d'eau bipermutée,
- 67,6 g d'acide acrylique,
- 0,54 g d'initiateur hydrosoluble du type acide 4,4' azobis (4- cyano pentanoique) commercialisé par la société Vopak sous le nom de V501.

Le milieu est alors chauffé à reflux (à température d'environ 101°C) durant sept heures.

On obtient un milieu homogène de couleur jaune que l'on neutralise avec de la soude à 50 % jusqu'à un pH de 8,2.

La concentration de matière sèche, mesurée par dissécation est de 25,7 %.

La concentration en acide acrylique non réagi est de 430 ppm mesuré par HPLC comme indiqué plus haut; ce qui nous donne un taux de conversion par rapport à l'acide acrylique de 99,2 %.

Une mesure GPC de la solution nous donne pour un étalonnage réalisé avec des étalons de l'acide polyacrylique (polyacrylates de sodium commercialisés par la société Polymer Standard Service sous les noms de PSS-PAA de 18K à 2K), une masse moléculaire en poids de 4960 g/mole pour un indice de polymolécularité de 1,97.

### Essai n°2 :

Les conditions opératoires, le matériel et les composés mis en oeuvre dans cet essai sont identiques en tout point à l'essai précédent, à l'exception de la neutralisation du polymère obtenu après les 7 heures de chauffage, qui s'effectue jusqu'à un pH de 8,2 à l'aide d'un mélange soude-chaux dans un rapport molaire 50/50.

Les caractéristiques du polymère obtenu en terme de poids moléculaire, d'acide acrylique non réagi et d'indice de polymolécularité sont identiques à celles de l'essai précédent.

Cet exemple permet de montrer qu'il est possible de synthétiser en milieu aqueux un sel de xanthate totalement hydrosoluble et que ce sel de xanthate totalement hydrosoluble est capable de polymériser l'acide acrylique avec des rendements élevés avec un contrôle de la réaction permettant d'obtenir les indices de polymolécularité faible, nous entendons par faibles des valeurs inférieures ou égales à2.

### Essai n°3

Cet essai concerne également la préparation d'un polymère selon l'invention mettant en oeuvre dans une première étape la synthèse « in situ » de l'agent de transfert hydrosoluble suivie de l'étape de polymérisation de l'acide acrylique.

Pour ce faire, on introduit dans un réacteur de 500 ml, muni d'une agitation :
- 30 g d'eau ;
- 5 g d'acide alpha bromo phényl acétique ;
- puis le milieu est neutralisé avec 3,85 g de soude 50% ;
- on ajoute alors 3,727 g d'éthyl xanthate de potassium.

Le milieu est limpide et le pH mesuré est égal à 4.

Celui-ci est laissé sous agitation pendant deux heures à température ambiante.

On charge ensuite dans ce réacteur :
- 214gd'eau;
- 71.4 g d'acide acrylique ;
- 0.57 g d'initiateur hydrosoluble du type acide 4,4' azobis (4- cyano pentanoique) commercialisé par la société Vopak sous le nom de V501.

Le milieu est alors chauffé à reflux pendant deux heures.

On obtient un milieu homogène de couleur orangée que l'on neutralise partiellement (90 % molaire) à l'aide d'un mélange soude-chaux dans un rapport molaire 50/40.

Le taux de conversion mesuré par HPLC dans les mêmes conditions que précédemment est de 99,0 % par rapport à l'acide acrylique.

Une mesure GPC effectuée selon les conditions décrites dans les essais précédents nous donne une masse moléculaire en poids de 7725 g/mole pour un indice de polymolécularité de 1,96.

### EXEMPLE 2 :

Cet exemple illustre la mise en oeuvre d'un polymère obtenu selon l'invention comme agent d'aide au broyage de matière minérale et plus particulièrement de carbonate de calcium. Cet exemple illustre également l'obtention de suspension aqueuse de carbonate de calcium selon l'invention.

Il est également à noter que ces suspensions de carbonate de calcium selon l'invention sont affinées, fortement concentrées en matière minérale et facilement manipulables par l'utilisateur final c'est-à-dire facilement utilisables aussi bien pour le couchage du papier que pour la charge de masse du papier.

Pour ce faire, on a préparé une suspension aqueuse à partir de carbonate de calcium provenant du gisement d'Orgon (France), de diamètre médian de l'ordre de 7 micromètres.

La suspension aqueuse a une concentration en matière sèche de 78 % en poids par rapport à la masse totale.

L'agent d'aide au broyage est introduit dans cette suspension selon les quantités indiquées dans le tableau ci-après, exprimées en pour cent en poids sec par rapport à la masse de carbonate de calcium sec à broyer.

La suspension circule dans un broyeur du type Dyno-Mill™ à cylindre fixe et impulseur tournant, dont le corps broyant est constitué par des billes de corindon de diamètre compris dans l'intervalle 0,6 millimètre à 1,0 millimètre.

Le volume total occupé par le corps broyant est de 1 150 centimètres cubes tandis que sa masse est de 2 900 g.
La chambre de broyage a un volume de 1 400 centimètres cubes.
La vitesse circonférentielle du broyeur est de 10 mètres par seconde.
La suspension de carbonate de calcium est recyclée à raison de 18 litres par heure.

La sortie du broyeur Dyno-Mill™ est munie d'un séparateur de mailles 200 microns permettant de séparer la suspension résultant du broyage et le corps broyant.
La température lors de chaque essai de broyage est maintenue à 60°C environ.

A la fin du broyage (Tₒ), on récupère dans un flacon un échantillon de la suspension pigmentaire. La granulométrie de cette suspension (% des particules inférieures à 1 micromètre) est mesurée à l'aide d'un granulomètre Sédigraph™ 5100 de la société Micromeritics.

La viscosité Brookfield™ de la suspension est mesurée à l'aide d'un viscosimètre Brookfield™ type RVT, à une température de 20°C et des vitesses de rotation de 10 tours par minute et 100 tours par minute avec le mobile adéquat.

### Essai n° 4 :

Cet essai illustre l'art antérieur et met en oeuvre 1,28 % en poids sec, par rapport au poids sec de carbonate de calcium, d'un polyacrylate, obtenu par un procédé classique de polymérisation radicalaire, de poids moléculaire en poids égal à 5500 g/mole, d'indice de polymolécularité égal à 2,2 et neutralisé par un mélange chaux-magnésie dans un rapport molaire égal à 50/50.

### Essai n° 5 :

Cet essai illustre l'invention et met en oeuvre le polyacrylate selon l'invention de l'essai n° 2.

Tous ces résultats expérimentaux sont consignés dans le tableau 1 suivant, qui de plus indiquent la consommation en pourcentage en poids d'agent d'aide au broyage utilisé pour obtenir la granulométrie indiquée :

**TABLEAU 1**

| *ESSAI N°* | | **Dispersant utilisé** | **Granulométrie %** < **1µm** | **% Dispersant** | **VISCOSITÉ BROOKFIELD (mPa.s)** | |
|---|---|---|---|---|---|---|
| | | | | | **T=0** | |
| | | | | | **10 T/min** | **100 T/min** |
| *3* | **Art antérieur** | Polyacrylate art antérieur | **80** | 1,28 | 3454 | 875 |
| *4* | **Invention** | Essai N°2 | **80** | 1,22 | 2165 | 600 |

La lecture des résultats du tableau 1 montre qu'il est possible d'utiliser les polymères selon l'invention comme agent d'aide au broyage de matières minérales en suspension aqueuse, et en particulier de carbonate de calcium naturel, tout comme il est possible d'obtenir des suspensions aqueuses de carbonate de calcium naturel contenant le polymère selon l'invention.

Ce tableau montre en outre que les résultats obtenus avec le polymère selon l'invention sont meilleurs, en terme de consommation d'agent d'aide au broyage et en terme de viscosité de la suspension obtenue, que ceux obtenus avec un polymère, couramment utilisé dans l'art antérieur.

Ces suspensions selon l'invention peuvent ainsi être avantageusement utilisées dans les domaines de l'industrie tels que notamment le domaine papetier, ou encore le domaine de la peinture, et en particulier dans le couchage du papier et la charge de masse du papier.

### EXEMPLE 3 :

Cet exemple illustre la mise en oeuvre d'un polymère obtenu selon l'invention comme agent d'aide au broyage de matière minérale et plus particulièrement de carbonate de calcium. Cet exemple illustre également l'obtention de suspension aqueuse de carbonate de calcium selon l'invention.

Dans cet exemple, le matériel et les conditions opératoires sont identiques à ceux utilisés dans l'exemple précédent, à l'exception du fait que l'on ajoute une quantité prédéterminée, à savoir 1,16 % en poids sec, par rapport au poids sec de carbonate de calcium, d'agent d'aide au broyage et que l'on compare les granulométries obtenues à dose équivalente d'agent d'aide au broyage, l'opération de broyage étant stoppée lorsque la viscosité de la suspension ne permet plus de conduire l'opération de broyage.

### Essai n° 6 :

Cet essai illustre l'art antérieur et met en oeuvre un polyacrylate, obtenu par un procédé classique de polymérisation radicalaire, de poids moléculaire en poids égal à 5500 g/mole et d'indice de polymolécularité égal à 2,4 et totalement neutralisé par la soude.

La suspension de carbonate de calcium obtenue à une granulométrie telle que 79,2 % des particules ont un diamètre inférieur à 1 micromètre, mesurée au Sedigraph™5100.

### Essai n° 7 :

Cet essai illustre l'invention et met en oeuvre le polyacrylate selon l'invention de l'essai n° 1.

La suspension de carbonate de calcium obtenue à une granulométrie telle que 89,3 % des particules ont un diamètre inférieur à 1 micromètre, mesurée au Sedigraph™5100.

La lecture des résultats précités montre qu'il est possible d'utiliser les polymères selon l'invention comme agent d'aide au broyage de matières minérales en suspension aqueuse, et en particulier de carbonate de calcium naturel, tout comme il est possible d'obtenir des suspensions aqueuses de carbonate de calcium naturel contenant le polymère selon l'invention.

De plus ces résultats montrent que le polymère selon l'invention permet d'atteindre une granulométrie plus fine que celle obtenue avec un polymère couramment utilisé dans l'art antérieur.

Ces suspensions selon l'invention peuvent ainsi être avantageusement utilisées dans les domaines de l'industrie tels que notamment le domaine papetier, ou encore le domaine de la peinture, et en particulier dans le couchage du papier et la charge de masse du papier.

## Revendications

1. Procédé d'homopolymérisation radicalaire contrôlée, en solution aqueuse, de l'acide acrylique et de ses sels ou de copolymérisation, en solution aqueuse, de l'acide acrylique avec un ou plusieurs monomères hydrosolubles, **caractérisé en ce qu'**il est en batch ou semi-batch et **en ce qu'**il comporte deux étapes dont la première est la synthèse "in situ" de l'agent de transfert hydrosoluble mis en oeuvre dans la deuxième étape de polymérisation.

2. Procédé selon la revendication 1 **caractérisé en ce que** le milieu réactionnel de la première étape de synthèse de l'agent de transfert et de la deuxième étape de polymérisation est identique et est uniquement de l'eau.

3. Procédé selon l'une quelconque des revendications 1 ou 2 **caractérisé en ce qu'**il est un procédé d'homopolymérisation radicalaire contrôlée, en solution aqueuse, de l'acide acrylique et **en ce qu'**il est en batch.

4. Procédé selon l'une des revendications 1 à 3 **caractérisé en ce que** l'agent de transfert hydrosoluble est un sel de xanthate α-substitué β-carboxylé, préférentiellement un xanthate de sodium α-substitué β-carboxylé et très préférentiellement un xanthate α-méthyl β-carboxylate de sodium.

5. Procédé selon l'une des revendications 1 à 4, **caractérisé en ce que** dans la deuxième étape de polymérisation les limites de quantité d'agent de transfert sont fixées de telle façon que le rapport molaire d'agent de transfert à monomère soit compris entre 0,001 % et 20 % et le rapport massique d'agent de transfert à monomère soit compris entre 0,01 % et 60 %.

6. Procédé selon l'une des revendications 1 à 5, **caractérisé en ce qu'**il consiste à mettre en contact dans la première étape :
- un xanthate de potassium.
- un sel de sodium d'acide 2-bromopropionique,
- de l'eau,
puis à ajouter dans une deuxième étape l'acide acrylique et au moins un initiateur hydrosoluble de radicaux libres.

7. Procédé selon l'une des revendications 1 à 6, **caractérisé en ce que** la première étape est réalisée avec des quantités équimolaires de xanthate de potassium et du sel de sodium de l'acide 2-bromopropionique.

8. Procédé selon l'une des revendications 1 à 2 et 4 à 7, **caractérisé en ce que** le ou les monomères copolymérisés hydrosolubles sont choisis parmi l'acide méthacrylique, l'acide itaconique; maléique, l'acide 2-acrylamido-2-méthyl-1-propane sulfonique sous forme acide ou partiellement neutralisée, l'acide 2-méthacrylamido-2-méthyl-1-propane sulfonique sous forme acide ou partiellement neutralisée, l'acide 3-méthacrylamido-2-hydroxy-1-propane sulfonique sous forme acide ou partiellement neutralisée, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl sulfonique, l'acide styrène sulfonique ainsi que tous leurs sels, l'acide vinyl sulfonique, le méthallylsulfonate de sodium, l'acrylate ou méthacrylate de sulfopropyle, le sulfométhylacrylamide, le sulfométhylméthacrylamide ou encore parmi l'acrylamide, le méthylacrylamide, le n-méthylolacrylamide, le n-acryloylmorpholine, le méthacrylate d'éthylène glycol, l'acrylate d'éthylène glycol, le méthacrylate de propylène glycol, l'acrylate de propylène glycol, l'acide propène phosphonique, le phosphate d'acrylate ou méthacrylate d'éthylène ou propylène glycol ou bien encore parmi la vinylpyrrolidone, le méthacrylamido propyl triméthyl ammonium chlorure ou sulfate, le méthacrylate de triméthyl ammonium éthyl chlorure ou sulfate, ainsi que leurs homologues en acrylate et en acrylamide quatemisés ou non et/ou le diméthyldiallylchlorure d'ammonium, ainsi que leurs mélanges.

## Claims

1. A process for controlled radical homopolymerisation, in an aqueous solution, of acrylic acid and its salts, or of copolymerisation, in aqueous solution, of acrylic acid with one or more hydrosoluble monomers, **characterised in that** it is in batch or semi-batch mode, and **in that** it comprises two stages, the first of which is synthesis "in situ" of the hydrosoluble transfer agent used in the second stage of polymerisation.

2. A process according to the claim 1 **characterised in that** the reactive medium of the first stage of synthesis of the transfer agent and of the second stage of polymerisation is identical and solely water.

3. A process according to anyone of claims 1 or 2 **characterised in that** it is a process of controlled radical homopolymerisation, in an aqueous solution, of acrylic acid and that it is undertaken in batch mode.

4. A process according to one of the claims 1 to 3 **characterised in that** the hydrosoluble transfer agent is an α-substitute β-carboxylate xanthate salt, preferably an α -substitute β -carboxylate sodium xanthate and very preferably an α -methyl β -carboxylate sodium xanthate.

5. A process according to one of the claims 1 to 4, **characterised in that** in the second stage of polymerisation the limits of quantity of transfer agent are determined such that the molar ratio of transfer agent to monomer is between 0,001% and 20%, and the mass ratio of transfer agent to monomer is between 0.01% and 60%.

6. A process according to one of the claims 1 to 5, **characterised in that** it consists in putting in contact in the first stage:
- a potassium xanthate,
- 2-bromopropionic acid sodium salt,
- water,
and then in adding in a second stage acrylic acid and at least one hydrosoluble initiator of free radicals.

7. A process according to one of the claims 1 to 6, **characterised in that** the first stage is undertaken with equimolar quantities of potassium xanthate and the sodium salt of 2-bromopropionic acid.

8. A process according to one of the claims 1 to 2 and 4 to 7, **characterised in that** the hydrosoluble copolymerised monomers are chosen from methacrylic acid, itaconic acid, maleic acid, 2-acrylamido-2-methyl-1-propane sulphonic acid in acid form or partially neutralised, 2-methacrylamido-2-methyl-1-propane sulphonic acid in acid form or partially neutralised, 3-methacrylamido-2-hydroxy-1-propane sulphonic acid in acid form or partially neutralised, allylsulphonic acid, methallylsulphonic acid, allyloxybenzene sulphonic acid, methallyloxybenzene sulphonic acid, 2-hydroxy-3-(2-propenyloxy)propane sulphonic acid, 2-methyl-2-propene-1-sulphonic acid, ethylene sulphonic acid, propene sulphonic acid, 2-methyl sulphonic acid, styrene sulphonic acid, as well as all their salts, vinyl sulphonic acid, sodium methallylsulfonate, sulfopropyl acrylate or methacrylate, sulfomethylacrylamide, sulfomethylmethacrylamide or from among acrylamide, methylacrylamide, n-methylolacrylamide, n-acryloylmorpholine, ethylene glycol methacrylate, ethylene glycol -acrylate, propylene glycol methacrylate, propylene glycol acrylate, propene phosphonic acid, ethylene or propylene glycol acrylate or methacrylate phosphate, or from among vinylpyrrolidone, methacrylamido propyl trimethyl ammonium chloride or sulphate, trimethyl ammonium ethyl chloride or sulphate methacrylate, as well as their acrylate or acrylamide counterparts, whether quaternised or not, and/or ammonium dimethyldiallylchloride, as well as mixtures thereof.

## Patentansprüche

1. Verfahren zur kontrollierten radikalischen Homopolymerisation, in wässriger Lösung, von Acrylsäure und ihren Salzen, oder zur Copolymerisation, in wässriger Lösung, von Acrylsäure mit einem oder mehreren wasserlöslichen Monomeren, **dadurch gekennzeichnet, dass** es als Batch- oder Semi-Batch-Verfahren durchgeführt wird, und dadurch, dass es zwei Schritte umfasst, wobei der erste Schritt die im zweiten Schritt der Polymerisation angewendete Synthese "in situ" des wasserlöslichen Transfermittels ist.

2. Verfahren nach Anspruch 1, **dadurch gekennzeichnet, dass** das reaktive Medium des ersten Schrittes der Synthese des Transfermittels und des zweiten Schrittes der Polymerisation identisch und ausschließlich Wasser ist.

3. Verfahren nach einem beliebigen der Ansprüche 1 oder 2, **dadurch gekennzeichnet, dass** es ein Verfahren zur kontrollierten radikalischen Homopolymerisation in wässriger Lösung von Acrylsäure ist und als Batch-Verfahren durchgeführt wird.

4. Verfahren nach einem der Ansprüche 1 bis 3, **dadurch gekennzeichnet, dass** das wasserlösliche Transfermittel ein α -substituiertes β -carboxyliertes Xanthatsalz, bevorzugterweise ein α -substituiertes β -carboxyliertes Natriumxanthat und sehr bevorzugterweise ein α -Methyl β -Carboxylat-Natriumxanthat ist.

5. Verfahren nach einem der Ansprüche 1 bis 4, **dadurch gekennzeichnet, dass** im zweiten Schritt der Polymerisation die Mengenbegrenzungen für das Transfermittel so festgelegt werden, dass das molare Verhältnis von Transfermittel zu Monomer zwischen 0,001 % und 20 % und das Massenverhältnis von Transfermittel zu Monomer zwischen 0,01 % und 60 % liegt.

6. Verfahren nach einem der Ansprüche 1 bis 5, **dadurch gekennzeichnet, dass** es im ersten Schritt darin besteht:
- Ein Kaliumxanthat,
- ein Natriumsalz von 2-Bromopropionsäure,
- Wasser
zu kontaktieren,
und in einem zweiten Schritt die Acrylsäure und mindestens einen wasserlöslichen Initiator für freie Radikale hinzuzufügen.

7. Verfahren nach einem der Ansprüche 1 bis 6, **dadurch gekennzeichnet, dass** der erste Schritt mit äquimolaren Mengen von Kaliumxanthat und Natriumsalz von 2-Bromopropionsäure durchgerührt wird.

8. Verfahren nach einem der Ansprüche 1 bis 2 und 4 bis 7, **dadurch gekennzeichnet, dass** das oder die wasserlösliche(n) copolymerisierte(n) Monomer(e) unter Methacrylsäure, Itaconsäure, Maleinsäure, 2-Acrylamido-2-methyl-1-propansulfonsäure in saurer oder teilweise neutralisierter Form, 2-Methacrylamido-2-methyl-1-propansulfonsäure in saurer oder teilweise neutralisierter Form, 3-Methacrylamido-2-hydroxy-1-propansulfonsäuze in saurer oder teilweise neutralisierter Form, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen-1-sulfonsäure, Ethylensulfonsäure, Propensulfonsäure, 2-Methylsulfonsäure, Styrolsulfonsäure sowie alle ihre Salze, Vinylsulfonsäure, Natriummethallylsulfonat, Sulfopropylacrylat oder Sulfopropylmethacrylat, Sulfomethylacrylamid, Sulfomethylmethacrylamid oder auch unter Acrylamid, Methacrylamid, N-Methylolacrylamid, N-Acryloylmorpholin, Ethylenglykolmethacrylat, Ethylenglykolacrylat, Propylenglykolmethacrylat, Propylenglykolacrylat, Propenphosphonsäure, Acrylphosphat oder Ethylenmethacrylat oder Proylenglykol, oder weiterhin unter Vinylpyrrolidon, Methacrylamidopropyltrimethyl-ammoniumchlorid oder -sulfat, Trimethylammoniumethylchloridmethacrylat oder Trimethylammoniumetbylsulfatmethacrylat sowie deren Homologen, welche mit Acrylat oder Acrylamid quaternisiert sind oder nicht, und/oder Ammoniumdimethyl-Diallylchlorid sowie deren Mischungen ausgewählt wird/werden.
